# EUROPEAN PATENT SPECIFICATION

(11) **EP 2 660 416 B1**
(45) Date of publication and mention of the grant of the patent: **17.09.2014**
(21) Application number: 13159303.0
(22) Date of filing: 14.03.2013
(51) Int. Cl.: E06B 3/263, E06B 3/30, E06B 3/58

(54) **Window, door or the like with insulating cover and method for the installation thereof**
Fenster oder Tür mit isolierter Abdeckung und Installationsverfahren
Fenêtre ou porte avec recouvrement insolant et méthode d'installation

(30) Priority: 03.05.2012 IT PD20120132
(43) Date of publication of application: 06.11.2013
(73) Proprietor: Uniform S.p.A., 37046 Minerbe VR (IT)
(72) Inventor: Tenzon, Franco, I-37046 Minerbe (VR) (IT)
(74) Representative: Gallo, Luca

(56) References cited:
- EP-A1- 1 329 583
- AT-U1- 10 584
- DE-C1- 10 100 101
- DE-U1- 29 916 942
- DE-U1-202012 000 420

## Description

### Field of application

The present invention refers to a window, door or the like with insulating cover and to a method for the installation thereof, according to the preamble of the respective independent claims.

The present window, door or the like is intended to be mainly employed in the field of production of windows, doors or the like and in particular in the obtainment of windows, doors or the like made of wood characterized by a low thermal transmittance coefficient.

### State of the art

According to the conventional art closest to the present invention, the windows, doors or the like with thermal insulation comprise a frame, typically made of wood or PVC, on which an external cover is mounted that is made of aluminum or plastic material adapted to protect the wood from weathering agents, such as in particular light, rain and sudden temperature changes. Between the frame and the external cover, a layer is interposed made of insulating material, for the purpose of reducing the dispersion of heat between the internal and external environment.

Patent EP 1070820 describes a window, door or the like of the type indicated above, in which the thermal insulation is constituted by a panel made of cork or wood fibers.

A plurality of spacers is provided, extending over the entire thickness of the thermal insulation in order to fix the latter and the aluminum cover to the frame. Each spacer is equipped with an enlarged head which creates an undercut on the lower part for the retention of the thermal insulation, and bears a clip externally mounted for fixing the aluminum cover.

Thus, the clip is traversed by a screw which is engaged by screwing in the wood frame, rigidly connecting together the wood frame, the thermal insulation and the aluminum cover without compressing the thermal insulation layer provided with low mechanical strength.

This window, door or the like is distinguished by a low thermal transmittance coefficient; nevertheless it has revealed some drawbacks.

A first drawback lies in the difficulties of precisely treating the insulating panel with cutting operations executed with automatic machines due to the fragility and low strength of the insulating material.

A second drawback lies in the fact that, in the case of removal of the external cover, the insulating panel can be easily damaged. Such circumstance may occur if for example during the replacement of a glass, the insulating panel is accidentally impacted by equipment of the designated maintenance personnel. Indeed, even though this patent provides for the use of cork or wood fibers as insulating material, it is clear that such materials lacking cover can be easily damaged.

In order to overcome these drawbacks, patent EP 1329583 discloses a window, door or the like provided with a cover with integrated thermal insulation. This cover comprises a panel obtained with an extruded profile made of synthetic or metal material, having the cavities filled with insulating material. Such cover is fastened to the frame of the window, door or the like by means of clips having the stem fixed to the frame and the head engaged in guides obtained on the external face of the cover.

The clips support the cover at a distance from the frame in order to prevent moisture accumulation.

The cover is further protected from the external environment by an aluminum profile mounted in a fitted manner.

A first drawback of the known window, door or the like described above lies in the fact that the distance between the cover and the frame does not allow maintaining the thermal transmittance value of the window, door or the like sufficiently low, with consequent loss of performance. The same distance between the cover and the frame, typically made of wood, exposes the latter to the action of weathering agents, with the consequent need to execute frequent maintenance operations.

A further drawback lies in the fact that the aforesaid window, door or the like is formed by numerous separate components which increase the costs of the production process, also due to the need to store the various components, and negatively affects the times for the installation and maintenance of the window, door or the like.

With the aim of improving the performance of the latter known embodiment, an insulated window, door or the like was recently placed on the market, described in the patent IT 1389481 on behalf of the Applicant. Here, the insulating cover consists of an extruded tubular profile delimiting at least one chamber filled with an insulating material. The extruded profile is provided with a first wall fixed to the external face of the frame by means of screws and with a second wall bearing a protection profile externally fixed by means of clips. Though overcoming the problems related to the aforementioned insulated windows, doors or the like, the embodiment has still revealed drawbacks, requiring a rather difficult production process due to the need to fill the extruded tubular profile with the insulating material.

AT 010 584 U shows a window according to the preamble of claim 1 and a method according to the preamble of claim 9.

### Presentation of the invention

The main object of the present invention is therefore to overcome the drawbacks revealed by the solutions of known type, by providing a window, door or the like with insulating cover, which allows insulating the internal environment from the external environment, ensuring a low thermal transmittance coefficient.

Further object of the present invention is to provide a window, door or the like with insulating cover, wherein the latter is easy to assemble and maintain and it is entirely reliable in operation.

Another object of the present invention is to provide a window, door or the like with insulating cover, wherein the latter is not subjected to breakage or tearing due to impact during installation, during maintenance or during the normal use of the window, door or the like.

Another object of the present invention is to provide a window, door or the like with insulating cover which requires low production costs.

Further object of the present invention is to provide a method for the installation of a window, door or the like with insulating cover which can be achieved quickly and in a practical manner.

### Brief description of the drawings

The technical characteristics of the invention, according to the aforesaid objects, can be clearly found in the contents of the claims outlined below, and the advantages thereof will be more evident in the following detailed description, made with reference to the attached drawings, which represent several merely exemplifying and non-limiting embodiments thereof wherein:
Figure 1 shows a sectional view of a crosspiece relative to a first embodiment of the window, door or the like according to the invention;
- Figure 2 shows a sectional view of a crosspiece relative to a second embodiment of the window, door or the like according to the invention.

### Detailed description of a preferred embodiment

In accordance with the figures of the attached drawings, the window, door or the like with insulating cover, object of the present invention, was indicated in its entirety with 1.

Below in the present description, reference will be made to a window/door/similar constituted by a window equipped with a double glazing panel; nevertheless, without departing from the protective scope of the present patent, it is intended that the window/door/similar can be differently constituted by a door, a French window, a skylight etc. provided with or without a glass panel. The window, door or the like with insulating cover 1 comprises, in a *per se* conventional manner, a window/door frame 2 intended to be anchored, embedded, in a wall of a building. The window/door frame 2 usually has the shape of a quadrangular frame obtained with two uprights and two crosspieces that define a lying plane. Such plane is the setting plane of the window, door or the like and it is equipped with an internal side, i.e. directed towards the building use space, and with an external side, i.e. directed towards the environment outside the building.

The window, door or the like may be used for the purposes of separating, protecting and insulating rooms, also allowing communication, and if necessary visual contact between the external and internal environments; in addition, it can facilitate the natural ventilation inside the rooms.

For the purpose of allowing the opening and closing of the window, door or the like 1, the latter is equipped with a shutter 4, supported by the window/door frame 2, which can have simple or compound movement and can be equipped (or not equipped) with a glass panel 42 composed of one or more glass panes separated by air chambers for an improved insulation.

In the case in which the shutter 4 is not necessary, the possible glass panel 42 rests directly on the window/door frame 2.

The window/door frame 2 and the shutter 4 are equipped with a frame 5, which is preferably made of wood and supports an insulating cover 6 on the external face 5' thereof. In this manner, the window/door frame and the shutter have, on the internal side, the conventional appearance of wood and on the external side the technical characteristics of the insulating cover with thermal insulation properties and resistance to weathering agents.

More in detail, the insulating cover 6 comprises a shaped body 7 made of insulating material, having a longitudinal extension parallel to the frame 5.

The shaped body 7 then follows the perimeter of the frame 5, which it must cover in order to protect and insulate it, and it is provided with a first face 7' directed towards the external face 5' of the frame 5, a second face 7", directed in the direction opposite the first face 7' and outwardly directed, and two lateral faces 7"' (with substantially quadrangular section in this case) arranged to connect the first and the second face 7' and 7" of the shaped body 7.

The insulating cover 6 also comprises, similar to various embodiments, a protection profile 12, e.g. constituted by an extruded aluminum profile, fixed by means of first fixing means 13 to the second face 7" of the shaped body 7.

The window, door or the like 1 also comprises second fixing means 14 adapted to rigidly connect the shaped body 7 to the relative frame 5.

As is better specified below, with particular reference respectively to the different technical choices employed for the shutter and for the window/door frame, the second fixing means 14 are adapted to mechanically connect the shaped body 7 directly to the relative frame 5 (solution employed for the window/door frame) or through the protection profile (solution employed for the shutter).

According to the idea underlying the present invention, the shaped body made of insulating material 7 comprises a core 15 made of an expanded polymer, such as sintered expanded polystyrene or extruded expanded polystyrene (known in the technical jargon of the field with the initials EPS and XPS), expanded polyurethane, of other materials with similar thermal properties or cork, and a flexible cover film 16, fixed by gluing (i.e. with at least a first glue layer) on at least one part of a face of the core 15 along the full longitudinal extension of the same core 15.

The flexible cover film 16 has tensile strength greater than that of the core 15, so as to obtain, together with the latter, a bar made of composite material having greater rigidity than that of the core 15 on its own.

Expanded polymers, and in particular EPS and XPS, have a high insulating capacity given their low density of 20-50 kg/m³, which allows retaining a lot of air. They are advantageously shaped in the desired form, and in accordance with the present invention in shaped bar form, by means of a step of cutting with a hot wire, with a wire with intermittent movement or with other milling instruments. The granules that compose the aforesaid expanded polymers EPS and XPS are easily detached, with little force, and have low rigidity.

The aforesaid expanded polymers EPS and XPS therefore have poor resistance to abrasion, breaking easily upon contact, and poor resistance to tensile stress such that bars of considerable length cannot be made therewith (e.g. 5-6 meters); however, this is advantageously required by the production process of the window, door or the like according to the present invention.

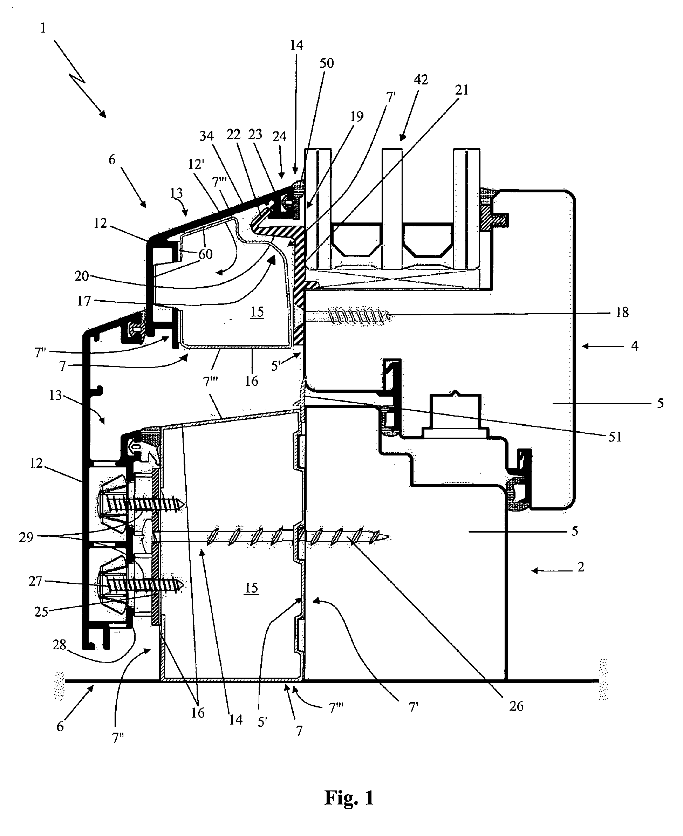

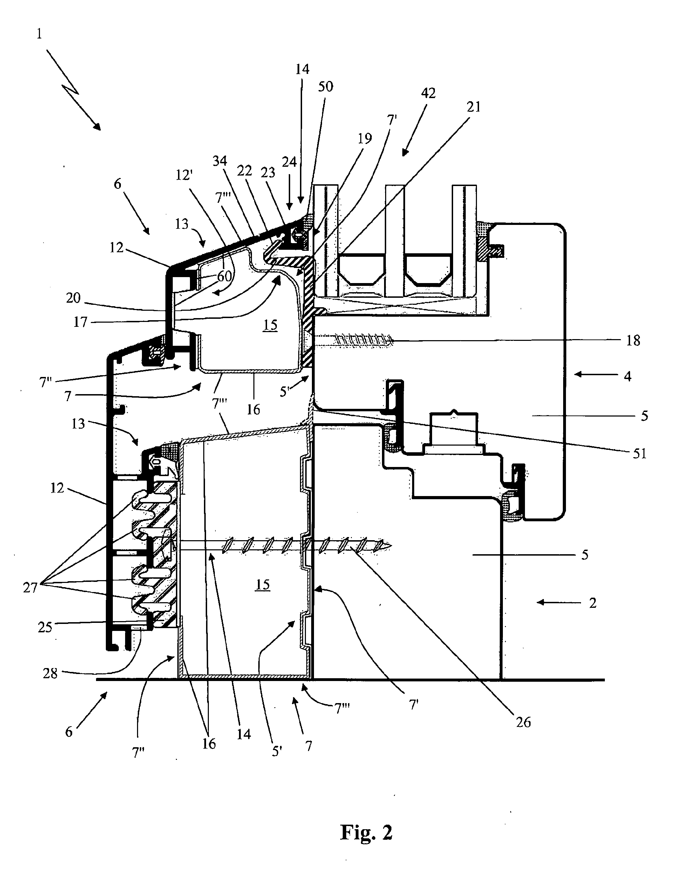

The flexible cover film 16 is selected with tensile stress resistance much greater than that of the core 15, so that the composite material bar that is formed following the gluing of the film 16 along the axial extension of the bar of the core 15 made of EPS and XPS is long enough to allow both a facilitated handling thereof in bar form during the process of production and installation of the window, door or the like 1, and an at least partial exposure (without protection) thereof once the shaped body made of insulating material 7 is fit in the window, door or the like 1. Indeed, as can be observed in the enclosed figures 1 and 2, the lateral face 7"' of the shaped body 7 is exposed to the outside environment on the upper part, when the shutter 4 is in position spaced from the window/door frame 2.

The flexible cover film 16 is selected from among numerous possible flexible covers, and it is for example advantageously constituted by a thin layer with greater rigidity than the aforesaid expanded polymers EPS and XPS, such as for example by a 0.1-0.5 mm layer made of PVC, fabric or a plastic laminate e.g. composed of a layer of paper impregnated with melamine resins, acrylic resins, polyurethane resins and/or other layers of different supports.

In case of maintenance interventions that require separating the insulating cover 6 from the frame 5, the flexible cover film 16 acts as a protection for the core 15 made of EPS and XPS which therefore cannot be impacted or ruined.

Thus, the flexible cover film 16 has the double function of stiffening the core made of insulating material 15 in order to allow a facilitated handling thereof during the production of the window, door or the like 1, and protecting the core 15 for the operations of maintenance and for allowing at least one side of the shaped body 7 to remain in direct contact with the outside environment without additional covering.

In this case, the protection film 16 preferably covers all the lateral faces of the core 15, except for the second face 7" where the second glue layer is provided for fixing the protection profile 12.

The abovementioned first and the second fixing means 13, 14, intended to rigidly connect respectively the protection profile 12 to the shaped body 7, and the shaped body 7 to the relative frame 5, can be obtained in a different manner depending on whether the insulating cover 6 is associated to the shutter 4 or to the window/door frame 2.

In the case of the shutter 4, the first fixing means 13, mentioned above, comprise a second glue layer indicated with 60 in the enclosed figures, adapted to fix the second face 7" of the shaped body 7 to the internal face 12' of the protection profile 12.

More in detail, advantageously, the glue layer 60 is interposed between at least a part of the front wall of the protection profile 12 and the second face 7" of the shaped body 7, and advantageously also between at least a part of the lateral wall 34 of the protection profile 12 and the external lateral face 7"' of the shaped body 7.

Advantageously, moreover, the shaped body 7 is provided on the second face 7" thereof with a rib adapted to be inserted in a retention relationship in a seat obtained on the internal face 12' of the protection profile 12, in order to improve the mechanical seal between the aforesaid two components.

The seat is advantageously defined between two lateral tabs of the protection profile 12, terminating with feet that rest on the second face 7" of the shaped body 7 with the second glue layer interposed.

In the case of the shutter 4, moreover, the second fixing means 14 advantageously comprise a plurality of shaped plates 17, each of which is at least partially interposed between the external face 5' of the frame 5 and the first face 7' of the shaped body 7; each plate is fixed by means of at least one screw 18 to the frame 5. Such screw is inserted with its flared head in a counter-shaped hole of the plate 17, such hole adapted to keep the screw embedded in the plate 17, i.e. without its bulk projecting above the plate 17.

Each plate 17, advantageously made of rigid plastic material, is provided with a first projecting appendage 19 which extends upward with a stem 20 from a base 21 and it is equipped with at least one first coupling end 22 susceptible to being snap-engaged following an elastic deformation thereof, with a second coupling end 23 arranged at an end edge 24 of a wall 34 of the protection profile 12.

In this manner, the shaped body 7 remains integrally retained and interposed between the shaped plates 17 and the protection profile 12.

Such end edge 24 of the wall 34 of the protection profile 12 is also provided with a groove in which a first gasket 50 is constrained, adapted to engage the surface of the glass panel 42.

In the case of the window/door frame 2, the second fixing means 14 advantageously comprise a longitudinal plate 25 mechanically associated with a first surface thereof to the second face 7" of the shaped body 7. Advantageously, the longitudinal plate 25 is made of glass fiber polyamide, wood or other plastic materials possibly reinforced with fibers and having rigidity greater than the EPS and XPS core 15.

The aforesaid longitudinal plate 25 is fixed to the frame 5 by means of a series of screws 26 spaced from each other along the length of the longitudinal plate 25. Each screw 26 engages with the head on the second surface of the longitudinal plate 25 and passes with the stem through the shaped body 7 until it is engaged in the frame 5.

In this manner, the shaped body 7 remains integrally retained and interposed between the longitudinal plate 25 and the protection profile 12.

In a seat placed below the first face 7' of the shaped body 7, at the lateral face 7"' thereof placed facing the shutter 4, a second gasket 51 can be fixed adapted to make a seal on the frame of the shutter 4, illustrated with dashed line in the enclosed figures.

Such second seal is advantageously mounted during the production process of the shaped body 2 of the window/door frame, so as to facilitate the setting and installation thereof.

In the case of the window/door frame 2, moreover, the first fixing means 13 comprise at least one first retention element 27 integral with the second surface of the longitudinal plate 25, and at least one second retention element 28 integral with the internal face 12' of the protection profile 12.

Advantageously, in accordance with the embodiment of figure 1, the first retention element 27 is constituted by a plurality of clips fixed to the longitudinal plate and spaced along the extension thereof; each clip is fixed by means of a screw 29, a rivet or similar fixing means. Each clip 27 is then engaged with the head in the second retention element 28 represented by a recess provided on the internal face 12' of the protection profile 12.

In this case, the protection film 16 preferably covers all the lateral faces of the core 15, leaving the first and the second face 7', 7" which are intended to abut against the frame 5 and to receive the longitudinal plate 25 free instead. The protection film 16 is preferably inserted for a section below the longitudinal plate 25, as illustrated in the figure.

Otherwise, in accordance with the embodiment of figure 2, the first retention element 27 is constituted by a second projecting appendage, which extends upward from the external face of the longitudinal plate 25 and it is equipped with a third coupling end susceptible to being snap-engaged following elastic deformation with a fourth coupling end of the second retention element 28, in this case constituted by a third projecting appendage being extended from the internal face 12' of the protection profile 12.

Both in the case of the shutter 4 and in the case of the window/door frame 2, due to the second fixing means 14, the shaped body 7 is retained on the external face of the frame 5 with the facing surfaces in adherence, without any cracks that can allow the weathering agents to reach the wood (hence deteriorating it) remaining therebetween.

Also forming the object of the present invention is a method for the installation of an insulating cover on the frame 5 of a window, door or the like 1.

Below, for the sake of descriptive ease, reference will be made to the same nomenclature introduced up to now, through it shall be observed that the present method can also be employed for installing insulating covers to frames 5 of windows, doors or the like 1 having different characteristics from those considered above.

The aforesaid method first comprises a first and a second step respectively for arranging at least one protection profile 6 and for arranging at least one shaped body 7 made of insulating material of the above-described type.

Then, a first step for fixing the protection profile 12 to the shaped body 7 and a second step for fixing the shaped body 7 to the frame are provided, advantageously respectively by means of the first and second fixing means 13 and 14 described above.

According to the idea underlying the present invention, the method is **characterized in that** the second step for arranging the shaped body 7 comprises a step for forming the core 15 made of sintered expanded polystyrene or extruded expanded polystyrene (EPS or XPS) in the form of an elongated bar with predominant longitudinal extension, and a step for gluing the flexible cover film 16 on at least a part of a lateral face 7"' of the core 15 along the longitudinal extension thereof. In this manner, a composite bar is obtained with greater rigidity than that of the starting bar with only the core 15.

More in detail, the second step for arranging the shaped body 7 initially comprises a step for forming the core 15 in shaped bar form, by means of a step for cutting with hot wire, with a wire with intermittent movement, or with other milling instruments generally starting from panels made of sintered expanded polystyrene or extruded expanded polystyrene. A covering step then follows, in which such shaped bar of the core 15 is covered by the aforesaid flexible film 16 through a gluing step, for the achievement of the composite bar with high length in order to facilitate the production process, e.g. 5-6 meters long.

At this point, there follows a step of cutting to size the previously produced composite bar, as a function of the length of the uprights and the crosspieces of the frame 5 to be covered.

More in detail, with the first step of fixing the protection profile 12 to the shaped body 7, an insulated assembly profile is obtained, such that with the second fixing step the aforesaid insulated assembly profile 12 is fixed to the frame 5.

In accordance with the embodiment described for the shutter 4 (but equally possibly provided for the window/door frame), a third step is also provided for arranging a plurality of shaped plates 17, each of which is provided with a first projecting appendage 19 equipped with at least one first coupling end 22. In this case, the second arranging step provides to obtain the protection profile 12 with a wall 34 equipped with a second coupling end 23 at the end edge 24 thereof. Consequently, the second step for fixing the insulated assembly profile to the frame 5 provides for fixing the plurality of shaped plates 17 to the frame 5 by means of screws 18 which are spaced from each other along the longitudinal extension of the same frame 5, to engage the insulated assembly profile to the aforesaid plurality of shaped plates 17 by means of snap-coupling via elastic deformation of the first coupling ends 22 of the first projecting appendices 19 of the plurality of shaped plates 17 with the second coupling ends 23 of the wall 34 of the protection profile 12.

In this manner, the shaped body 7 remains retained interposed between the shaped plates 17 and the protection profile 12.

In accordance with the embodiment described for the window/door frame (but equally possibly provided for the shutter), the second fixing step provides to mechanically couple a longitudinal plate 25 to the second face 7" of the shaped body 7, to fix the longitudinal plate 25 to the frame 5 by means of screws 26, with the shaped body 7 retained interposed between the longitudinal plate 25 and the frame 5. The first fixing step in this case provides to fix clips 27 (with screws or rivets) spaced along the longitudinal plate 25 and then to engage the protection profile 12 to the clips 27 by means of snap-coupling the heads of the clips 27 in recesses 28 provided on the internal face 12' of the protection profile 12.

The invention thus conceived therefore achieves the pre-established objects.

Of course, in the practical achievement thereof, it can also assume forms and configurations that are different from that illustrated above, without departing from the present protective scope as defined in the claims. In addition, all details can be replaced by technically equivalent elements and the shapes, size and materials used can be of any type as required.

## Claims

1. Window, door or the like with insulating cover (1) comprising:
- a frame (5), in particular made of wood having a perimeter extension and an external face (5');
- an insulating cover (6) mounted on said external face (5') and in turn provided with:
- at least one shaped body (7) made of insulating material, having a longitudinal extension parallel to said frame (5) with a first face (7') directed towards the external face (5') of said frame (5), and with a second face (7") directed in the direction opposite said first face (7'), and with at least one lateral face (7"') arranged to connect said first (7') and second face (7");
- at least one protection profile (12) fixed by means of first fixing means (13) on the second face (7") of said shaped body (7);
- second fixing means (14) adapted to rigidly connect said shaped body (7) to said frame (5);
- wherein said shaped body (7) made of insulating material comprises:
- a core (15) made of sintered expanded polystyrene or extruded expanded polystyrene (EPS or XPS) or expanded polyurethane;
- **characterized in that**: said shaped body further comprises a flexible cover film (16), with tensile strength greater than that of said core (15), fixed via gluing on at least a part of one face of said core (15) along the entire longitudinal extension thereof; said core (15) and said film (16) making a composite bar with greater rigidity than that of said core (15).

2. Window, door or the like with insulating cover (1) according to claim 1, **characterized in that** said flexible cover film (16) is a 0.1-0.5 mm layer made of PVC, or fabric or a plastic laminate.

3. Window, door or the like with insulating cover (1) according to claim 1, **characterized in that** said first fixing means (13) comprise a glue layer adapted to fix the second face (7") of said shaped body (7) to an internal face (12') of said protection profile (12).

4. Window, door or the like with insulating cover (1) according to claim 1, **characterized in that** said second fixing means (14) comprise a plurality of shaped plates (17), each of which is at least partially interposed between the external face (5') of said frame (5) and the first face (7') of said shaped body (7), each plate fixed by means of at least one screw (18) to said frame (5), each plate provided with a first projecting appendage (19) equipped with at least one first coupling end (22) susceptible to being snap-engaged following elastic deformation with a second coupling end (23) of a wall (34) of said protection profile (12); said shaped body (7) remaining retained interposed between said shaped plates (17) and said protection profile (12).

5. Window, door or the like with insulating cover (1) according to claim 1, **characterized in that** said second fixing means (14) comprise a longitudinal plate (25) mechanically associated with a first surface thereof to the second face (7") of said shaped body (7) and fixed to said frame (5) by means of at least one screw (26), engaging with the head on the second surface of said longitudinal plate (25) and passing with the stem through said shaped body (7) until it is engaged in said frame (5), said shaped body (7) remaining retained interposed between said longitudinal plate (25) and said frame (5).

6. Window, door or the like with insulating cover (1) according to claim 5, **characterized in that** said first fixing means (13) comprise at least one first retention element (27) integral with the second surface of said longitudinal plate (25), and at least one second retention element (28) integral with the internal face (12') of said protection profile (12).

7. Window, door or the like with insulating cover (1) according to claim 6, **characterized in that** said first retention element (27) is constituted by a clip, in particular fixed to the longitudinal plate (25) by means of a screw or a rivet and being engaged with the head with the second retention element (28) constituted by a recess provided on the internal face (12') of said protection profile (12).

8. Window, door or the like with insulating cover (1) according to claim 6, **characterized in that** said first retention element (27) is constituted by at least one second appendage projecting from said longitudinal plate (25) and equipped with a third coupling end susceptible to being snap-engaged following elastic deformation with a fourth coupling end of the second retention element (28) constituted by a third projecting appendage being extended from the internal face (12') of said protection profile (12).

9. Method for the installation of an insulating cover (6) to the frame (5) of a window, door or the like (1), which comprises:
- a first step for arranging at least one protection profile (12);
- a second step for arranging at least one shaped body (7) made of insulating material, having a longitudinal extension parallel to said frame (5), with a first face (7') directed towards the external face (5') of said frame (5), and with a second face (7") directed in the direction opposite said first face (7'), and with at least one lateral face (7"') arranged to connect said first (7') and second (7") face;
- a first step for fixing said protection profile (12) to said shaped body (7);
- a second step for fixing said shaped body (7) to said frame (5); said second step for arranging said shaped body (7) comprises:
- a step for forming a core (15) made of sintered expanded polystyrene or extruded expanded polystyrene (EPS or XPS) in the form of an elongated bar with predominant longitudinal extension;
- **characterized in that** said second step for arranging said shaped body further comprises a step for gluing a flexible cover film (16) on at least a part of a lateral face of said core (15) for the entire longitudinal extension thereof, said flexible cover film (16) having a tensile strength along said longitudinal extension that is greater than that of said core (15), in order to obtain a composite bar with greater rigidity than that of said core (15) on its own.

10. Method for the installation of an insulating cover (6) to the frame (5) of a window, door or the like (1) according to claim 9, **characterized in that** said second step for arranging said shaped body (7) comprises a step for cutting to length said composite bar as a function of the length of the uprights and the crosspieces of the frame (5) to be covered.

11. Method for the installation of an insulating cover (6) to the frame (5) of a window, door or the like (1) according to claim 9, **characterized in that**:
- said first step for fixing said protection profile (12) to said shaped body (7) achieves an insulated assembly profile;
- and said second fixing step is achieved by fixing said insulated assembly profile to said frame (5).

12. Method for the installation of an insulating cover (6) to the frame (5) of a window, door or the like (1) according to claim 11, **characterized in that** it comprises:
- a third step for arranging a plurality of shaped plates (17), each of which provided with a first projecting appendage (19) equipped with at least one first coupling end (22);
- said second step for arranging at least one protection profile (12) providing for a wall (34) equipped with at least one second coupling end (23) at an end edge (24) thereof;
- said second step for fixing said insulated assembly profile to said frame (5) providing to:
- fix said plurality of shaped plates (17) to said frame (5) by means of screws (18) which are spaced along the longitudinal extension of the frame (5);
- engage said insulated assembly profile with said plurality of shaped plates (17) by means of snap-coupling via elastic deformation of the first coupling ends (22) of the first projecting appendices (19) of said plurality of shaped plates (17) with the second coupling end (23) of the wall (34) of said protection profile (12); said shaped body (7) remaining retained interposed between said shaped plates (17) and said protection profile (12).

13. Method for the installation of an insulating cover (6) to the frame (5) of a window, door or the like (1) according to claim 9, **characterized in that**:
said second fixing step provides to:
- mechanically couple a longitudinal plate (25) to the second face (7") of said shaped body (7);
- fix said longitudinal plate (25) to said frame (5) by means of screws (26), with said shaped body (7) retained interposed between said longitudinal plate (25) and said frame (5);
said first fixing step provides to:
- fix clips (27) spaced along said longitudinal plate (25);
- engage said protection profile (12) with said clips (27) by means of snap-coupling of the heads of said clips (27) into recesses (28) provided for on the internal face (12') of said protection profile (12).

## Patentansprüche

1. Fenster oder Tür mit isolierter Abdeckung (1) umfassend:
- einen Rahmen (5), insbesondere aus Holz, der rundum verläuft und eine Außenfläche (5');
- eine isolierte Abdeckung (6), die auf der genannten Außenfläche (5') montiert und ihrerseits mit Folgendem ausgestattet ist:
- wenigstens einem Formkörper (7) aus Isoliermaterial, der längs parallel zu dem genannten Rahmen (5) verläuft, mit einer ersten Fläche (7'), die zur Außenfläche (5') des genannten Rahmens (5) gerichtet ist, und einer zweiten Fläche (7"), die in die Gegenrichtung der genannten ersten Fläche (7') gerichtet ist, und mit wenigstens einer Seitenfläche (7"'), die als Verbindung der genannten ersten (7') und zweiten Fläche (7") dient;
- mindestens einem Schutzprofil (12), das mit ersten Befestigungsvorrichtungen (13) an der zweiten Fläche (7") des genannten Formkörpers (7) befestigt ist;
- zweiten Befestigungsvorrichtungen (14), die geeignet sind, den genannten Formkörper (7) steif mit dem genannten Rahmen (5) zu verbinden;
wobei der genannte Formkörper (7) aus Isoliermaterial Folgendes umfasst:
- eine Einlage (15) aus gesintertem Polystyrolschaum oder extrudiertem Polystyrolschaum (EPS oder XPS) oder Polyurethanschaum;
**dadurch gekennzeichnet, dass** der genannte Formkörper eine biegsame Abdeckfolie (16) mit einer höheren Zugfestigkeit als die genannten Einlage (15) weiter umfasst, die durch Verkleben an wenigstens einem Teil einer Fläche der genannten Einlage (15) entlang ihres Längsverlaufs befestigt ist; wobei die genannte Einlage (15) und die genannte Folie (16) einen Verbundbalken mit einer im Vergleich zur genannten Einlage (15) höheren Steifigkeit erzielen.

2. Fenster oder Tür mit isolierter Abdeckung (1) nach Anspruch 1, **dadurch gekennzeichnet, dass** die genannte biegsame Abdeckfolie (16) aus einer 0,1-0,5 mm starken Schicht aus PVC oder Gewebe oder Kunststofflaminat besteht.

3. Fenster oder Tür mit isolierter Abdeckung (1) nach Anspruch 1, **dadurch gekennzeichnet, dass** die genannten ersten Befestigungsvorrichtungen (13) eine Klebstoffschicht umfassen, die geeignet ist, die zweite Fläche (7") des genannten Formkörpers (7) an einer Innenfläche (12') des genannten Schutzprofils (12) zu befestigen.

4. Fenster oder Tür mit isolierter Abdeckung (1) nach Anspruch 1, **dadurch gekennzeichnet, dass** die genannten zweiten Befestigungsvorrichtungen (14) eine Vielzahl von geformten Platten (17) umfassen, von denen sich jede wenigstens teilweise zwischen der Außenfläche (5') des genannten Rahmens (5) und der ersten Fläche (7') des genannten Formkörpers (7) befindet, mit wenigstens einer Schraube (18) an dem genannten Rahmen (5) befestigt und mit einem ersten vorstehenden Zusatzstück (19) ausgestattet ist, das mit einem ersten Befestigungsrand (22) versehen ist, der geeignet ist, im Anschluss an die elastische Verformung in einen zweiten Befestigungsrand (23) einer Wand (34) des genannten Schutzprofils (12) einzurasten; wobei der genannte Formkörper (7) zwischen den beiden genannten geformten Platten (17) und dem genannten Schutzprofil (12) zurückgehalten wird.

5. Fenster oder Tür mit isolierter Abdeckung (1) nach Anspruch 1, **dadurch gekennzeichnet, dass** die genannten Befestigungsvorrichtungen (14) eine längs verlaufende Platte (25) umfassen, die mechanisch mit einer ersten Oberfläche an der zweiten Fläche (7") des genannten Formkörpers (7) verbunden und an dem genannten Rahmen (5) mit wenigstens einer Schraube (26) befestigt ist, die sich mit dem Kopf auf der zweiten Oberfläche in Eingriff befindet und mit dem Schaft über den genannten Formkörper (7) verläuft, bis sie in den genannten Rahmen (5) einrastet und zwischen der genannten längs verlaufenden Platte (25) und dem genannten Rahmen (5) zurückgehalten wird.

6. Fenster oder Tür mit isolierter Abdeckung (1) nach Anspruch 5, **dadurch gekennzeichnet, dass** die genannten ersten Befestigungsvorrichtungen (13) wenigstens ein erstes Rückhalteelement (27), das mit der zweiten Oberfläche der genannten längs verlaufenden Platte (25) verbunden ist und wenigstens ein zweites Rückhalteelement (28) umfassen, das mit der Innenfläche (12') des genannten Schutzprofils (12) verbunden ist.

7. Fenster oder Tür mit isolierter Abdeckung (1) nach Anspruch 6, **dadurch gekennzeichnet, dass** das genannte erste Rückhalteelement (27) aus einem Clip besteht, der insbesondere an der längs verlaufenden Platte (25) mittels einer Schraube oder Niete befestigt ist und mit dem Kopf mit dem zweiten Rückhalteelement (28) verbunden ist, das aus einer auf der Innenfläche (12') des genannten Schutzprofils (12) vorgesehenen Nische besteht.

8. Fenster oder Tür mit isolierter Abdeckung (1) nach Anspruch 6, **dadurch gekennzeichnet, dass** das genannte erste Rückhalteelement (27) aus wenigstens einem zweiten von der genannten längs verlaufenden Platte (25) vorstehenden Zusatzstück besteht und mit einem dritten Befestigungsrand ausgestattet ist, der geeignet ist, im Anschluss an die elastische Verformung in einen vierten Befestigungsrand des zweiten Rückhalteelements (28), das aus einem dritten vorstehenden Zusatzstück besteht, das von der Innenfläche (12') des genannten Schutzprofils (12) aus verläuft, einzurasten.

9. Installationsverfahren einer isolierten Abdeckung (6) am Rahmen (5) eines Fensters oder einer Tür (1), umfassend:
- eine erste Phase der Herstellung wenigstens eines Schutzprofils (12);
- eine zweite Phase der Herstellung wenigstens eines Formkörpers (7) aus Isoliermaterial, der längs parallel zu dem genannten Rahmen (5) verläuft, mit einer ersten Fläche (7'), die zur Außenfläche (5') des genannten Rahmens (5) gerichtet ist, und mit einer zweiten Fläche (7"), die in die Gegenrichtung der genannten ersten Fläche (7') gerichtet ist, und mit wenigstens einer Seitenfläche (7'"), die als Verbindung der genannten ersten (7') und zweiten Fläche (7") dient;
- eine erste Phase der Befestigung des genannten Schutzprofils (12) an dem genannten Formkörper (7);
- eine zweite Phase der Befestigung des genannten Formkörpers (7) an dem genannten Rahmen (5);
wobei die genannte zweite Phase der Herstellung des genannten Formkörpers (7) Folgendes umfasst:
- eine Phase der Formung einer Einlage (15) aus gesintertem Schaumpolystyrol oder extrudiertem Schaumpolystyrol (EPS oder XPS) in Form eines länglichen Balkens mit vorherrschendem Verlauf in Längsrichtung;
**dadurch gekennzeichnet, dass** die genannte zweite Phase der Herstellung des Formkörpers eine Phase des Verklebens einer biegsamen Abdeckfolie (16) auf wenigstens einem Teil einer Seitenfläche der genannten Einlage (15) auf ihrem gesamten Längsverlauf weiterumfasst, wobei die genannte biegsame Abdeckfolie (16) eine Zugfestigkeit entlang des genannten Längsverlaufs aufweist, die größer als die der genannten Einlage (15) ist, um einen Verbundbalken mit im Vergleich zu der genannten Einlage (15) allein höheren Steifigkeit zu erzielen.

10. Installationsverfahren einer isolierten Abdeckung (6) am Rahmen (5) eines Fensters oder einer Tür (1) nach Anspruch 9, **dadurch gekennzeichnet, dass** die genannte zweite Phase der Herstellung des genannten Formkörpers (7) eine Phase des maßgerechten Zuschneidens des genannten Verbundbalkens abhängig von der Länge der Pfosten und der Querstreben des zu verkleidenden Rahmens (5) umfasst.

11. Installationsverfahren einer isolierten Abdeckung (6) am Rahmen (5) eines Fensters oder einer Tür (1) nach Anspruch 9, **dadurch gekennzeichnet, dass**:
- die genannte erste Phase der Befestigung des genannten Schutzprofils (12) an dem genannten Formkörper (7) ein isoliertes Gesamtprofil erzielt;
- und die genannte zweite Befestigungsphase durch Befestigen des genannten isolierten Gesamtprofils an dem genannten Rahmen (5) erfolgt.

12. Installationsverfahren einer isolierten Abdeckung (6) am Rahmen (5) eines Fensters oder einer Tür (1) nach Anspruch 11, **dadurch gekennzeichnet, dass** es Folgendes umfasst:
- eine dritte Phase der Herstellung einer Vielzahl von geformten Platten (17), von denen jede mit einem ersten vorstehenden Zusatzstück (19) ausgestattet ist, das mit wenigstens einem ersten Befestigungsrand (22) versehen ist;
- wobei die genannte zweite Herstellungsphase wenigstens eines Schutzprofils (12) eine Wand (34) vorsieht, die mit wenigstens einem zweiten Befestigungsrand (23) auf einem ihrer Enden (24) ausgestattet ist;
- wobei die genannte zweite Befestigungsphase des genannten isolierten Gesamtprofils an dem genannten Rahmen (5) Folgendes vorsieht:
- Befestigung mittels Schrauben (18) der genannten Vielzahl geformter Platten (17) an dem genannten Rahmen (5) im Abstand zueinander entlang des Längsverlaufs des Letzteren;
- Verbinden des genannten isolierten Gesamtprofils mit der genannten Vielzahl geformter Platten (17) mittels Einrastverbindung durch elastische Verformung der ersten Befestigungsränder (22) der ersten vorstehenden Zusatzstücke (19) der genannten Vielzahl geformter Platten (17) mit dem zweiten Befestigungsrand (23) der Wand (34) des genannten Schutzprofils (12); wobei der genannte Formkörper (7) zwischen den genannten geformten Platten (17) und dem genannten Schutzprofil (12) zurückgehalten wird.

13. Installationsverfahren einer isolierten Abdeckung (6) am Rahmen (5) eines Fensters oder einer Tür (1) nach Anspruch 9, **dadurch gekennzeichnet, dass**:
die genannte zweite Befestigungsphase Folgendes vorsieht:
- mechanische Verbindung einer längs verlaufenden Platte (25) mit der zweite Fläche (7") des genannten Formkörpers (7);
- Befestigung mittels Schrauben (26) der genannten längs verlaufenden Platte (25) an dem genannten Rahmen (5) mit dem genannten Formkörper (7), der zwischen der genannten längs verlaufenden Platte (25) und dem genannten Rahmen (5) zurückgehalten wird;
die genannte erste Befestigungsphase sieht Folgendes vor:
- Befestigung der Clips (27) im Abstand zueinander entlang der genannten längs verlaufenden Platte (25);
- Verbindung des genannten Schutzprofils (12) mit den genannten Clips (27) mittels Einrastverbindung der Köpfe der genannten Clips (27) in Nischen (28), die auf der Innenfläche (12') des genannten Schutzprofils (12) vorgesehen sind.

## Revendications

1. Fenêtre ou porte avec recouvrement isolant (1) comprenant :
- un cadre (5), notamment en bois ayant un développement périmétrique et une face extérieure (5');
- un recouvrement isolant (6) monté sur ladite face extérieure (5') et muni à son tour de :
- au moins un corps profilé (7) en matériau isolant, ayant un développement longitudinal parallèle audit cadre (5) avec une première face (7') tournée vers la face extérieure (5') dudit cadre (5), et avec une deuxième face (7") tournée dans le sens opposé à ladite première face (7'), et avec au moins une face latérale (7'") placée comme liaison entre lesdites première (7') et deuxième face (7") ;
- au moins un profil de protection (12) fixé moyennant des premiers moyens de fixation (13) sur la deuxième face (7") dudit corps profilé (7) ;
- deuxièmes moyens de fixation (14) aptes à relier rigidement ledit corps profilé (7) audit cadre (5) ;
dans laquelle ledit corps profilé (7) en matériau isolant comprend :
- une âme (15) en polystyrène expansé sintérisé ou en polystyrène expansé extrudé (EPS ou XPS) ou en polyuréthane expansé ;
**caractérisée en ce que** ledit corps profilé comprend en outre un film flexible de couverture (16), avec résistance à traction supérieure à celle de ladite âme (15), fixé par encollage sur au moins une partie d'une face de ladite âme (15) le long de son développement longitudinal entier ; ladite âme (15) et ledit film (16) réalisant une barre composite de rigidité supérieure à celle de ladite âme (15).

2. Fenêtre ou porte avec recouvrement isolant (1) selon la revendication 1, **caractérisée en ce que** ledit film flexible de couverture (16) est une couche de 0,1-0,5 mm de PVC, ou de tissu ou de laminé plastique.

3. Fenêtre ou porte avec recouvrement isolant (1) selon la revendication 1, **caractérisée en ce que** lesdits premiers moyens de fixation (13) comprennent une couche de colle apte à fixer la deuxième face (7") dudit corps profilé (7) à une face intérieure (12') dudit profil de protection (12).

4. Fenêtre ou porte avec recouvrement isolant (1) selon la revendication 1, **caractérisée en ce que** lesdits deuxièmes moyens de fixation (14) comprennent une pluralité de plaques façonnées (17), chacune desquelles est au moins partiellement interposée entre la face extérieure (5') dudit cadre (5) et la première face (7') dudit corps profilé (7), est fixée moyennant au moins une vis (18) audit cadre (5), est pourvue d'une première appendice saillante (19) munie d'au moins une première extrémité d'accrochage (22) susceptible de s'engager par encliquetage à la suite d'une déformation élastique dans une seconde extrémité d'accrochage (23) d'une paroi (34) dudit profil de protection (12) ; ledit corps profilé (7) restant retenu interposé entre lesdites plaques façonnées (17) et ledit profil de protection (12).

5. Fenêtre ou porte avec recouvrement isolant (1) selon la revendication 1, **caractérisée en ce que** lesdits deuxièmes moyens de fixation (14) comprennent une plaque longitudinale (25) mécaniquement associée, avec sa première surface, à la deuxième face (7") dudit corps profilé (7) et fixée audit cadre (5) moyennant au moins une vis (26), mordant avec la tête la deuxième surface et passant avec la tige à travers dudit corps profilé (7) jusqu'à s'engager dans ledit cadre (5), ledit corps profilé (7) restant retenu interposé entre ladite plaque longitudinale (25) et ledit cadre (5).

6. Fenêtre ou porte avec recouvrement isolant (1) selon la revendication 5, **caractérisée en ce que** lesdits premiers moyens de fixation (13) comprennent au moins un premier élément de retenue (27) solidaire de la deuxième surface de ladite plaque longitudinale (25), et au moins un deuxième élément de retenue (28) solidaire de la face intérieure (12') dudit profil de protection (12).

7. Fenêtre ou porte avec recouvrement isolant (1) selon la revendication 6, **caractérisée en ce que** ledit premier élément de retenue (27) est constitué d'un clip, fixé notamment à la plaque longitudinale (25) moyennant une vis ou un rivet et s'engageant avec la tête dans le deuxième élément de retenue (28) constitué d'une cavité prévue sur la face intérieure (12') dudit profil de protection (12).

8. Fenêtre ou porte avec recouvrement isolant (1) selon la revendication 6, **caractérisée en ce que** ledit premier élément de retenue (27) est constitué d'au moins une deuxième appendice saillante de ladite plaque longitudinale (25) et munie d'une troisième extrémité d'accrochage susceptible de s'engager par encliquetage à la suite d'une déformation plastique dans une quatrième extrémité d'accrochage du deuxième élément de retenue (28) constitué d'une troisième appendice saillante s'étendant de la face intérieure (12') dudit profil de protection (12).

9. Méthode d'installation d'un recouvrement isolant (6) sur le cadre (5) d'une fenêtre ou d'une porte (1), laquelle comprend :
- une première phase de préparation d'au moins un profil de protection (12) ;
- une deuxième phase de préparation d'au moins un corps profilé (7) en matériau isolant, ayant un développement longitudinal parallèle audit cadre (5), avec une première face (7') tournée vers la face extérieure (5') dudit cadre (5), et avec une deuxième face (7") tournée dans le sens opposé à ladite première face (7'), et avec au moins une face latérale (7"') placée comme liaison entre lesdites première (7') et deuxième (7") face ;
- une première phase de fixation dudit profil de protection (12) audit corps profilé (7) ;
- une deuxième phase de fixation dudit corps profilé (7) audit cadre (5) ;
ladite deuxième phase de préparation dudit corps profilé (7) comprend :
- une phase de moulage d'une âme (15) en polystyrène expansé sintérisé ou en polystyrène expansé extrudé (EPS ou XPS) avec la forme d'une barre allongée avec développement longitudinal prédominant ;
**caractérisée en ce que** ladite deuxième phase de préparation dudit corps profilé comprend en outre une phase d'encollage d'un film flexible de couverture (16) sur au moins une partie d'une face latérale de ladite âme (15) sur son développement longitudinal entier, ledit film flexible de couverture (16) ayant une résistance à traction le long dudit développement longitudinal, supérieure à celle de ladite âme (15), pour réaliser une barre composite avec rigidité supérieure à celle de ladite seule âme (15).

10. Méthode d'installation d'un recouvrement isolant (6) sur le cadre (5) d'une fenêtre ou d'une porte (1) selon la revendication 9, **caractérisée en ce que** ladite deuxième phase de préparation dudit corps profilé (7) comprend une phase de coupe à mesure de ladite barre composite en fonction de la longueur des montants et des traverses du cadre (5) à recouvrir.

11. Méthode d'installation d'un recouvrement isolant (6) sur le cadre (5) d'une fenêtre ou d'une porte (1) selon la revendication 9, **caractérisée en ce que** :
- ladite première phase de fixation dudit profil de protection (12) audit corps profilé (7) réalise un profil d'ensemble isolé ;
- et ladite deuxième phase de fixation est réalisée en fixant ledit profil d'ensemble isolé audit cadre (5).

12. Méthode d'installation d'un recouvrement isolant (6) sur le cadre (5) d'une fenêtre ou d'une porte (1) selon la revendication 11, **caractérisée en ce qu'**elle comprend :
- une troisième phase de préparation d'une pluralité de plaques façonnées (17) chacune desquelles munie d'une première appendice (19) saillante munie d'au moins une première extrémité d'accrochage (22) ;
- ladite deuxième phase de préparation d'au moins un profil de protection (12) prévoyant une paroi (34) munie d'au moins une deuxième extrémité d'accrochage (23) au niveau de son bord d'extrémité (24) ;
- ladite deuxième phase de fixation dudit profil d'ensemble isolé audit cadre (5) prévoyant de :
- fixer moyennant des vis (18) ladite pluralité de plaques façonnées (17) audit cadre (5) espacées le long du développement longitudinal de ce dernier ;
- engager ledit profil d'ensemble isolé dans ladite pluralité de plaques façonnées (17) moyennant un accouplement par encliquetage par déformation élastique des premières extrémités d'accrochage (22) des premières appendices saillantes (19) de ladite pluralité de plaques façonnées (17) avec la deuxième extrémité d'accrochage (23) de la paroi (34) dudit profil de protection (12) ; ledit corps profilé (7) restant retenu interposé entre lesdites plaques façonnées (17) et ledit profil de protection (12).

13. Méthode d'installation d'un recouvrement isolant (6) sur le cadre (5) d'une fenêtre ou d'une porte (1) selon la revendication 9, **caractérisée en ce que** :
ladite deuxième phase de fixation prévoit de :
- accoupler mécaniquement une plaque longitudinale (25) avec la deuxième face (7") dudit corps profilé (7) ;
- fixer moyennant des vis (26) ladite plaque longitudinale (25) audit cadre (5) avec ledit corps profilé (7) retenu interposé entre ladite plaque longitudinale (25) et ledit cadre (5) ;
ladite première phase de fixation prévoit de :
- fixer des clips (27) espacés le long de ladite plaque longitudinale (25) ;
- engager ledit profil de protection (12) dans lesdits clips (27) moyennant un accouplement par encliquetage des têtes desdits clips (27) dans des cavités (28) prévues sur la face intérieure (12') dudit profil de protection (12).
